(19) Europäisches Patentamt
European Patent Office
Office européen des brevets

(11) EP 2 381 390 A2

(12) EUROPEAN PATENT APPLICATION
published in accordance with Art. 153(4) EPC

(43) Date of publication:
26.10.2011 Bulletin 2011/43

(51) Int Cl.:
*G06K 9/00* (2006.01)    *H04N 5/225* (2006.01)

(21) Application number: 09833607.6

(22) Date of filing: 11.12.2009

(86) International application number:
PCT/KR2009/007418

(87) International publication number:
WO 2010/071329 (24.06.2010 Gazette 2010/25)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 16.12.2008  KR 20080127575

(71) Applicant: Iritech Inc.
Fairfax, VA 22030 (US)

(72) Inventors:
• CHOI, Hyeong In
Seoul 135-838 (KR)
• KIM, Dae Hoon
Seoul 135-280 (KR)
• LEE, Sung Jin
Seoul 139-768 (KR)
• MOON, Hwan Pyo
Anyang
Kyeonggi-do 431-756 (KR)
• KWON, Song Hwa
Kyeonggi-do 421-820 (KR)
• PAIK, Seung Min
Seoul 156-051 (KR)
• SOHN, Jung Kyo
Seoul 151-010 (KR)

(74) Representative: Delumeau, François Guy et al
Cabinet Beau de Loménie
158, rue de l'Université
75340 Paris Cedex 07 (FR)

(54) **APPARATUS AND METHOD FOR ACQUIRING HIGH QUALITY EYE IMAGES FOR IRIS RECOGNITION**

(57) The present invention provides a method for acquiring high quality eye images, comprising the steps of: dividing a camera mode for eye image acquisition into a pre-photographing mode and a main photographing mode, comparing the degree of eye capture, actual eye, resolution, contrast ratio, noise level, angle of the face when an object to be photographed stares at a lens, location of the pupil in the eye, and the degree of exposure of the iris in the eye, etc., with a preset reference quality condition to evaluate the quality of eye images acquired in the pre-photographing mode, and switching from the pre-photographing mode to the main photographing mode if the preset reference quality condition is satisfied; capturing a plurality of eye images in the main photographing mode, finishing the main photographing mode if the preset condition for finishing the main photographing mode is satisfied, and setting a candidate group from the stored plurality of images; comparing the images with the preset reference quality condition if no candidate group is set, and returning to the main photographing mode or pre-photographing mode in accordance with the result of the comparison; and selecting final images from the candidate group if the candidate group is set.

FIG 1

**Description**

[Technical Field]

The present invention relates to an apparatus and method for acquiring high quality eye images for iris recognition, which includes: dividing a camera mode for high quality eye image acquisition into a pre-photographing mode and a main photographing mode, and acquiring one or more eye images through a camera in the pre-photographing mode; evaluating image quality based on one or more eye images acquired by the camera, comparing the evaluated quality with a reference quality condition set in a memory, and switching from the pre-photographing mode to the main photographing mode if the reference quality condition is satisfied; capturing a plurality of eye images in the main photographing mode, and finishing the main photographing mode if a preset condition for finishing the main photographing mode is satisfied; setting a candidate group from the stored plurality of eye images; and selecting a final image from the candidate group if the candidate group is set, and more particularly, returning to the main photographing mode or pre-photographing mode by determining again whether the eye images captured in the main photographing mode satisfy the preset reference quality condition if no candidate group is set from the eye images captured in the main photographing mode.

[Background Art]

From an iris recognition viewpoint, the quality of eye images enables iris recognition to have a low determination error only if an eye image is acquired with an exactly reproduced iris when photographing an eye. Accordingly, the quality of eye images for iris recognition is dependent on how faithfully an iris and its circumference are reproduced. In general, the quality of acquired eye images is influenced by performance of a camera and a lens and photographing surroundings.
Difference in acquiring eye images for registration and authentication is as follows. In a typical iris recognition system, an eye image is divided into two, the eye image for the registration and the eye image for authentication in accordance with its use. The eye image for registration is registered and stored in a database associated with an iris recognition system, and can be photographed offline in a specially given environment. However, the eye image for authentication is used for authentication and authorization and must be electronically photographed in consideration of convenience of a person to be photographed within a short time when acquired. As a result, it is difficult for the eye image for authentication to have the highest quality within an allowable limit of the camera performance.
First, a personal iris recognition system will be described. In the case where the iris recognition system is installed for authentication or authorization in a mobile terminal such as a notebook computer, a smart phone, a personal digital assistant (PDA), etc., the performance of the camera connected or mounted to the terminal varies in accordance with the size, price and performance of the terminal, and is often poor. Particularly, if a camera having no autofocus or using a lens with a shallow depth of field (DOF) is connected to the mobile terminal, it is not easy to acquire a well focused eye image and an eye image having an exactly reproduced iris. If a user must photograph his/her own eye personally without any separate guide, it is very difficult to position a user's eye within a view angle of a camera lens and at a focal distance by moving his/her body or moving the camera.
Next, a guide unit of a conventional camera device will be described. To capture a self-shot, the conventional camera device provides a separate display screen such as a liquid crystal display (LCD) and makes a person preview a photographic screen, but is somewhat expensive since a unit for preview is needed. To solve this problem, a mirror is attached to a proper position of the camera so that a person to be photographed can adjust his/her position while looking at his/her reflection in the mirror. In this case, it is easy for a person to be photographed to position his/her eye within an image to be photographed, but it is difficult for a person to position himself/herself at a focal distance. The conventional photographing method has the following problems. As a conventional method of photographing the eye, there is a method of waiting until an optimum condition is satisfied and capturing an image if the condition is satisfied to thereby use the captured image as the eye image, and a method of capturing an image only if a proper condition is satisfied and using the captured image as the eye image. The former is advantageous to obtain a high quality image, but disadvantageously inconveniences a person to be photographed if it takes a long time to satisfy the optimum condition. Also, the latter is advantageous captured image in that an image can be quickly captured, but disadvantageous in obtaining a high quality image.

[Disclosure]

[Technical Problem]

Therefore, the present invention is directed to solving the problems of the related art as described above, and an aspect of the present invention is to acquire a high quality eye image, by dividing a camera mode for acquiring an eye image into a pre-photographing mode and a main photographing mode, determining whether a predetermined level or more image can be acquired from an iris recognition viewpoint after a main operator compares a quality level of an image taken in the pre-photographing mode with a preset reference quality level stored in a memory, and switching from the pre-photographing mode to the main photographing mode when it is higher than the reference quality level (middle level) to thereby photograph and acquire a plurality of iris images.

Another aspect of the present invention is to acquire an eye image having quality close to the highest quality allowable given the performance of a camera even though a lens of the camera photographing an eye has no autofocus, by weighting each of evaluation items such as the degree of eye capture, actual eye, resolution, contrast ratio, noise level, an angle of the face when a person to be photographed stares at a lens, location of the pupil, the degree of exposure of the iris in the eye, etc., for the reference of the eye image having a preset reference quality level stored in a memory.

Still another aspect of the present invention is to effectively acquire a high quality eye image, by providing a guide about motion of an object to be photographed and performing quality analysis upon an obtained image through a main operator as a photographing guide, in which a signal transmitter and a display are combined, is association with a main operator.

Yet another aspect of the present invention is to effectively acquire a high quality eye image by adding an actuator to a camera so that a lens can automatically move forward and backward, acquiring a plurality of eye images even though an object to be photographed is stationary, and performing quality analysis upon an obtained image through a main operator.

[Technical Solution]

In accordance with one aspect of the present invention, there are provided an apparatus and method for acquiring high quality eye images for iris recognition with a camera, a lens, a main operator, a buffer and a photographing guide, which includes: dividing a camera mode for high quality eye image acquisition into a pre-photographing mode and a main photographing mode, acquiring one or more eye images through a camera in the pre-photographing mode and storing the eye images in a buffer; evaluating image quality based on one or more eye images acquired by the camera in the pre-photographing mode and stored in the buffer, comparing the evaluated quality of the eye image with a reference quality condition set and stored in a memory, and switching from the pre-photographing mode to the main photographing mode if the reference quality condition is satisfied; capturing a plurality of eye images in the main photographing mode and storing them in the buffer, and finishing the main photographing mode if a preset condition for finishing the main photographing mode is satisfied; and selecting a final image from the images stored in the main photographing mode, and more particularly, returning to the main photographing mode or pre-photographing mode by determining again whether the eye images captured in the main photographing mode satisfy the preset reference quality condition if no candidate group is set from the eye images captured in the main photographing mode.

In accordance with another aspect of the present invention, there are provided an apparatus and method for acquiring high quality eye images by evaluating a general quality level as the main operator divides satisfactory conditions into good, fair and poor or sets a numerical value for the setting value or level with respect to evaluation items, conditions for valid eye images, and conditions for entering the main photographing mode, etc. in order to set the reference quality level for evaluating the quality of acquired images.

[Advantageous Effects]

According to one embodiment, a high quality eye image is acquired by dividing a camera mode for acquiring an eye image into a pre-photographing mode and a main photographing mode, determining whether a predetermined level or more image can be acquired from an iris recognition viewpoint after a main operator compares a quality level of an image captured in the pre-photographing mode with a preset reference quality level stored in a memory, and switching from the pre-photographing mode to the main photographing mode when it is higher than the reference quality level to thereby photograph and acquire a plurality of irises.

According to another embodiment, the apparatus and method can effectively acquire an eye image having quality close to the highest quality allowable given the performance of a camera even though a lens of the camera photographing an eye has no autofocus, weighting each of evaluation items such as the degree of eye capture, actual eye, resolution, contrast ratio, noise level, an angle of the face when a person to be photographed stares at a lens, location of the pupil in the eye, the degree of exposure of the iris in the eye, etc., for the reference of the eye image having a preset reference quality level stored in a memory.

According to a further embodiment, the apparatus and method can acquire a high quality eye image by providing a guide about motion of an object to be photographed and making a quality analysis of an obtained image through a main operator as a photographing guide, in which a signal transmitter and a display are combined, is associated with a main operator.

According to one embodiment, the apparatus and method can effectively acquire a high quality eye image by adding an actuator to a camera so that a lens can automatically move forward and backward, acquiring a plurality of eye images even though an object to be photographed is stationary, and making a quality analysis of an obtained image through a main operator.

[Description of Drawings]

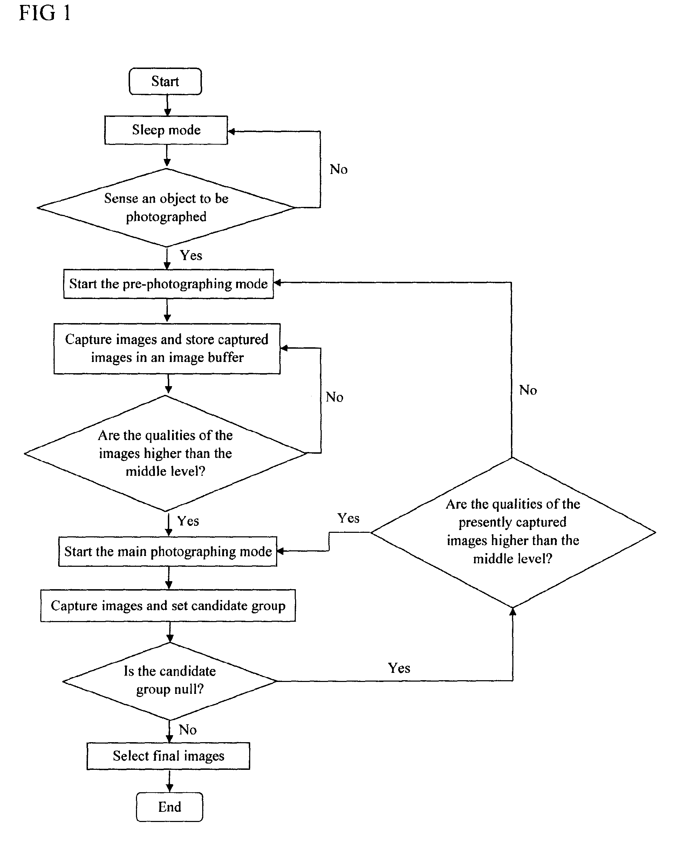

FIG. 1 is a flowchart of a process of acquiring an eye image according to an exemplary embodiment of the present invention;

FIG. 2 is a block diagram of an apparatus according to an exemplary embodiment of the present invention;

FIG. 3 is a block diagram of the apparatus according to the exemplary embodiment of the present invention;

FIG. 4 is a block diagram of the apparatus according to the exemplary embodiment of the present invention;

FIG. 5 is a view showing a proper relationship between a camera and a person to be photographed;

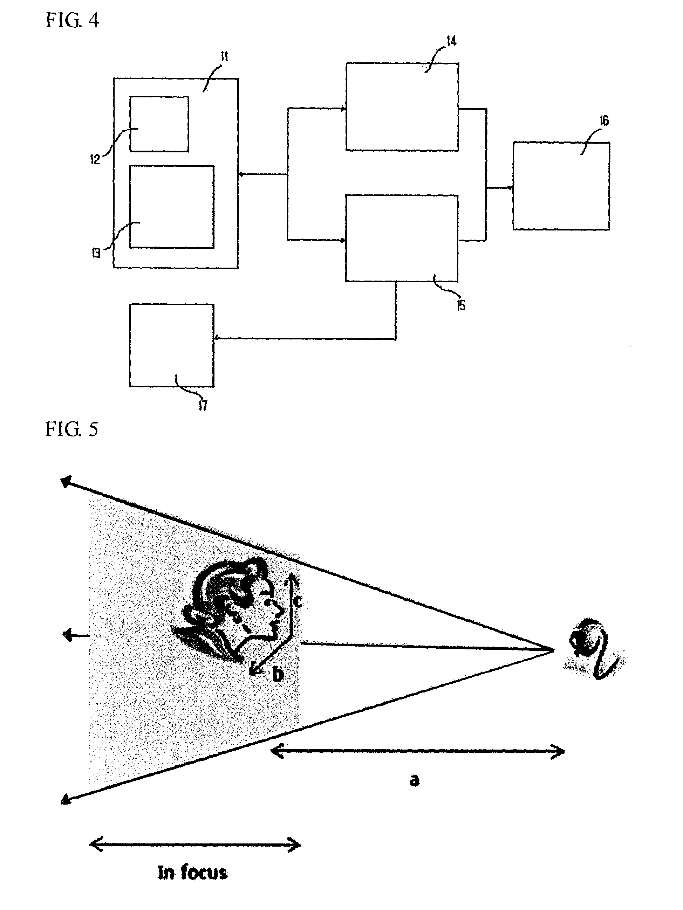

FIG. 5 is a view showing an improper relationship between a camera and a person to be photographed;

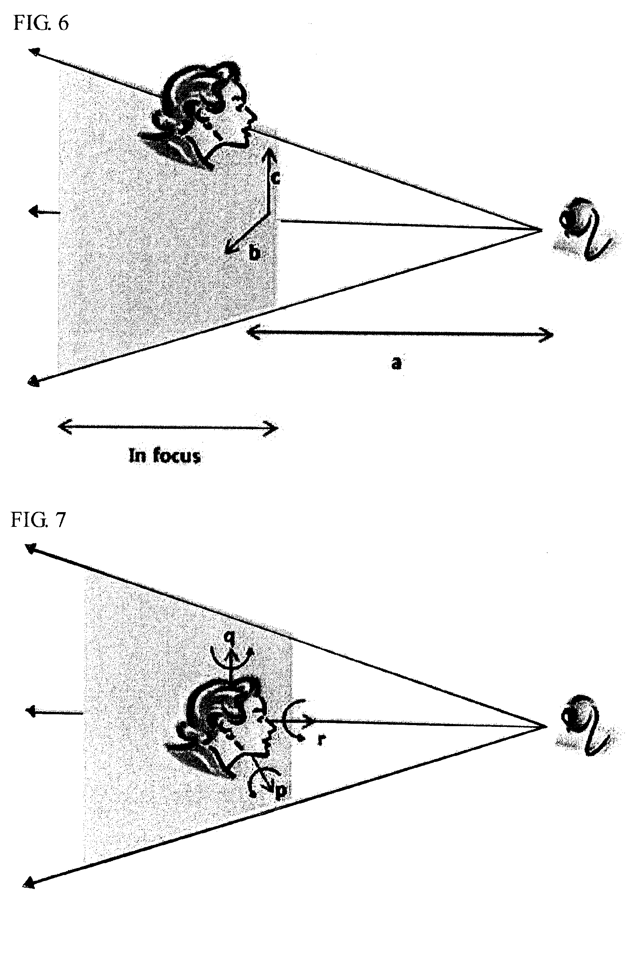

FIG. 7 is a view showing that a person to be photographed properly looks at a camera;

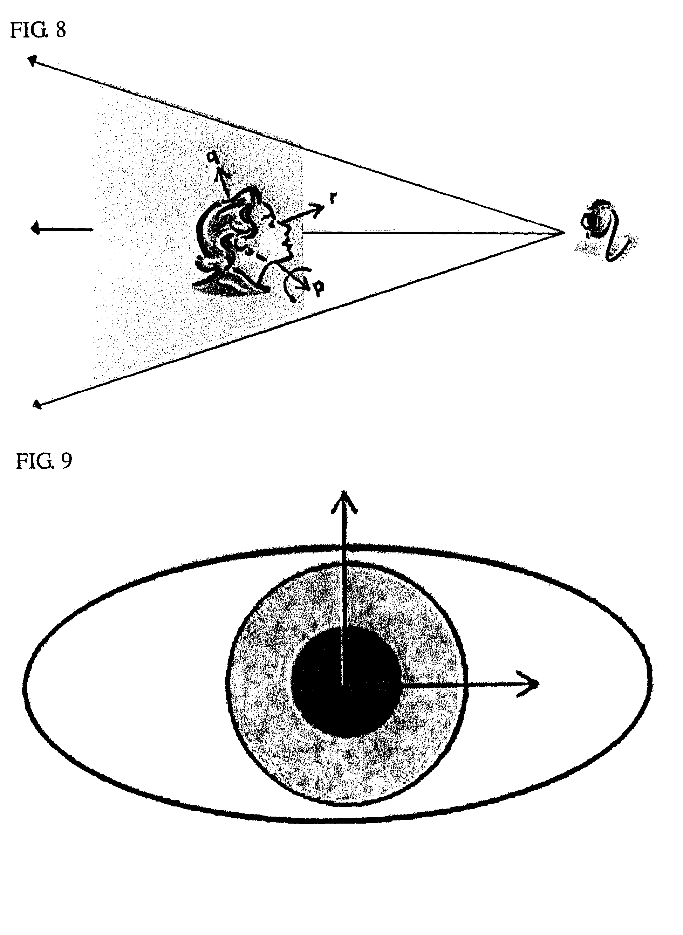

FIG. 8 is a view showing that a person to be photographed improperly looks at a camera;

FIG. 9 is a view showing that the pupil is located at the center in an eye of a person to be photographed; and

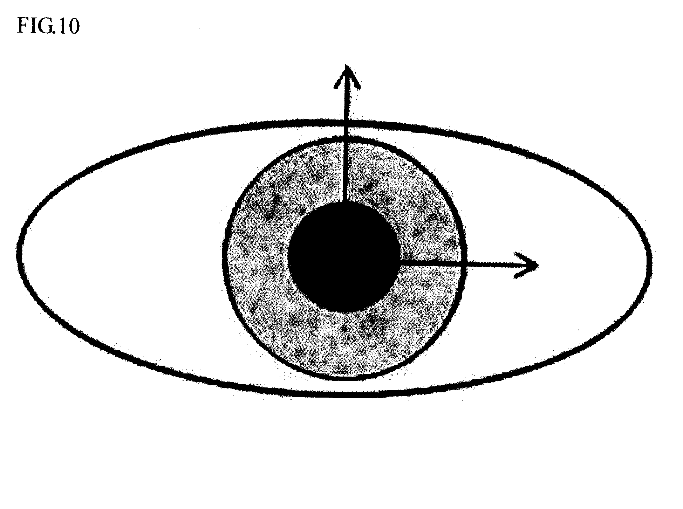

FIG. 10 is a view showing that the pupil is located at a right side in an eye of a person to be photographed.

[Best Mode]

The best mode for embodying the present invention includes a camera, a lens, a main operator, a buffer and a photographing guide, and provides an apparatus and method for acquiring high quality eye images for iris recognition, which includes: dividing a camera mode for high quality eye image acquisition into a pre-photographing mode and a main photographing mode, acquiring one or more eye images through a camera in the pre-photographing mode and storing the eye images in a buffer; evaluating image quality based on one or more eye images acquired by the camera in the pre-photographing mode and stored in the buffer, comparing the evaluated quality of the eye image with a reference quality condition set and stored in a memory, and switching from the pre-photographing mode to the main photographing mode if the reference quality condition is satisfied; capturing a plurality of eye images in the main photographing mode and storing them in the buffer, and finishing the main photographing mode if a preset condition for finishing the main photographing mode is satisfied; and selecting a final image from the images stored in the main photographing mode, and more particularly, returning to the main photographing mode or pre-photographing mode by determining again whether the eye images captured in the main photographing mode satisfy the preset reference quality condition if no candidate group is set from the eye images captured in the main photographing mode.

[Mode for Invention]

Detailed exemplary embodiments of the present invention will be described with reference to accompanying drawings. In accordance with the present invention, a location relation between a person to be photographed and a camera is as follows. For convenience, assume that a position of a camera lens and a viewing angle are fixed but a person to be photographed is freely movable. Alternatively, the location of the person to be photographed and the view angle may be fixed but the camera lens may be freely movable, or both the person to be photographed and the camera lens may be freely movable. In either case, the location relation between the person to be photographed and the camera will be described on the above assumption.

Regarding the fixed camera lens, a location of a person to be photographed and an angle of a face staring at the camera lens can be represented with eight dimensional coordinates such as ((a, b, c), (p, q, r), (x, y)). The first three coordinates (a, b, c) represent a relational position of a person to be photographed relative to the fixed camera lens, in which 'a' indicates a distance between the lens and the person to be photographed along a lens axis, and 'b' and 'c' indicate coordinates on an object plane perpendicular to the lens axis. The next three coordinates (p, q, r) represent staring angles of a face of a person to be photographed with respect to the fixed camera lens, which indicate pitch, yaw and roll, respectively. The last two coordinates (x, y) represent a location of the pupil.

A process for obtaining a satisfactory eye image using the above parameters about the location and the angle is as follows. As a first condition for the eye image, an eye of a person to be photographed has to be within a view angle of the camera lens. Particularly, an iris part of the eye has to be within the view angle. This varies depending on the parameters b and c of a person to be photographed (see FIGs. 5 and 6). If the eye of the person to be photographed enters within the view angle, an angle of his/her face staring at the lens must not deviate from a front direction of the lens (see FIGs. 7 and 8). This is related to the parameters p and q. If the parameter r indicates the roll of the face about the lens axis, there is no problem as long as the parameters p and q correspond to a reference quality level set and stored in a memory. If all the parameters are within a range of the preset reference quality level stored in the memory, the next important thing is the location of the pupil. It is possible to acquire a satisfactory iris image from a captured image only when the pupil is located in the vicinity of the center in the eye. This corresponds to the parameters x and y (see FIGs. 9 and 10). Last, to clearly obtain an eye portion from an image, the eye of the person to be photographed has to be located within focused depth of field. This is determined by the parameter a indicating the distance between the lens and the person to be photographed along the lens axis.

In brief, the parameters b, c, p, q, r, x, y determine the quality of an eye image showing whether the eye and the iris are properly arranged in an image to be captured, and the parameter 'a' indicates resolution of an image of an eye. As a result, to acquire an eye image satisfying the minimum condition for iris recognition, a person to be photographed has to position his/her own eyes with respect to the fixed camera lens so that the parameters can have proper values. As mentioned above, it is very difficult for a person to be photographed to position his/her eyes so that these conditions can be satisfied without any separate guide.

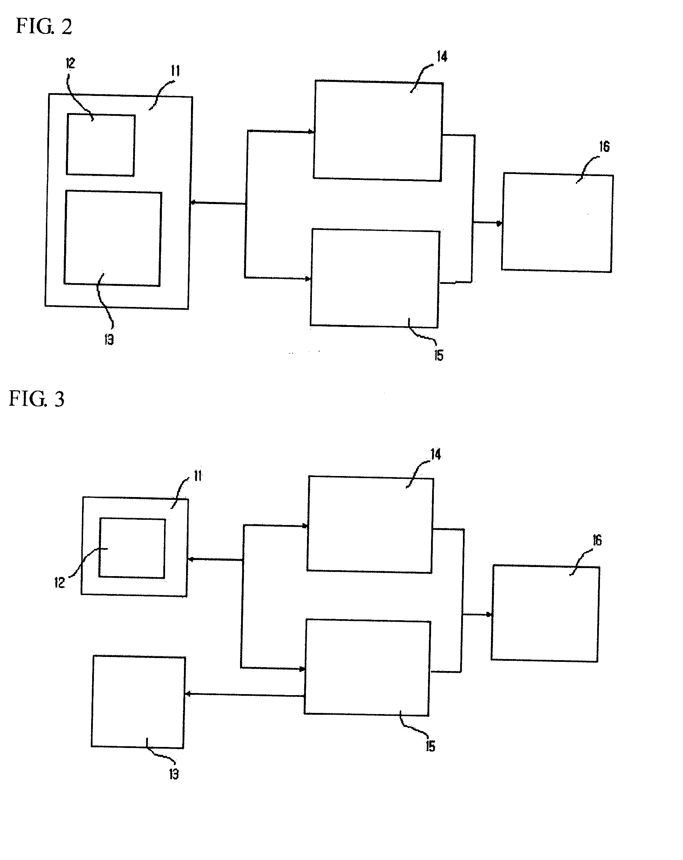

Next, the configuration of an apparatus will be described. In accordance with an exemplary embodiment of the present invention, 'an apparatus for acquiring a high quality eye image' includes a camera 11, a lens 12, a main operator 15, a buffer 14, an image storage 16, and a photographing guide 13. The main operator 15 is associated with the camera 11, the photographing guide 13, the buffer 14 and the image storage 16; the camera 11 is mostly associated with the buffer 14 and the main operator 15; and the photographing guide 13 is mostly associated with the main operator 14, but they may be variously configured as necessary. FIGs. 2, 3 and 4 illustrate various possible configurations of the apparatus according to exemplary embodiments, but the present invention is not limited thereto.

The apparatus for acquiring an eye image in accordance with the present invention includes the camera 11, the lens 12, the main operator 15, the buffer 14, the image storage 16 and the photographing guide 13, which includes a unit for dividing a camera mode for eye image acquisition into a pre-photographing mode and a main photographing mode, and acquiring and storing one or more eye images through a camera in the pre-photographing mode; a unit for evaluating image quality based on one or more eye images acquired by the camera by associating the main operator with the image storage, comparing an evaluated quality level of the eye image with a reference quality level of a middle level set and stored in a memory, and switching from the pre-photographing mode to the main photographing mode if the reference quality level is satisfied; a unit for capturing a plurality of eye images through the camera in the main photographing mode, setting a candidate group from the eye images through association between the main operator and the image storage, and selecting a final image from the eye image candidate group through association between the image storage and the main operator if the eye image candidate group is set.

If no candidate group is set from the eye images captured in the main photographing mode, there may be provided a unit for returning to the main photographing mode or the pre-photographing mode by determining again through the association between the main operator and the image storage whether the eye images captured in the main photographing mode satisfy the preset reference quality level.

The image quality level is evaluated based on a general image quality level wherein the degree of eye capture, actual eye, resolution, contrast ratio, noise level, an angle of the face when a person to be photographed stares at a lens, location of the pupil in the eye, the degree of exposure of the iris, etc. are all reflected.

Next, the photographing guide will be described. The photographing guide serves to transmit a mode switching signal to a person to be photographed or to output a signal for motion instruction for photographing. To this end, the photographing guide basically includes a signal transmitter for outputting an instruction signal, and may additionally include a display. The signal transmitter of the photographing guide may include at least one selected from a unit for generating an audible signal such as sound or voice; a unit for generating a visual signal based on a light emitting diode (LED), a flash or the like; a unit for generating a vibration; and a combination thereof. The display displays an image of an object to be photographed so that the object can quickly move to a location where a satisfactory image can be acquired. The display may be achieved by a mirror and/or a display such as a liquid crystal display (LCD) or the like. The photographing guide may be divided into two types, an active photographing guide and a passive photographing guide in accordance with whether or not the main operator is involved in the motion instruction for the photographing. In the case of the active photographing guide, the main operator continuously performs motion analysis of an object to be photographed, and thus provides a motion guide to the object. On the other hand, in the case of the passive photographing guide, an analysis as to which position the object to be photographed is at is not made by the main operator, and a motion guide for the object to be photographed is given unilaterally.

Next, the definition and kind of eye image will be described. The eye image is a digital image such as a photographed eye, which must include a partial or entire image of an iris region needed for iris recognition. Requisites for the eye image considering the iris recognition will be described in detail together with image quality evaluation and quality levels from an iris recognition viewpoint.

Next, two modes of the camera, i.e. the pre-photographing mode and the main photographing mode will be described. Besides a sleep mode, there are the pre-photographing mode and the main photographing mode as the modes of the camera for acquiring the eye image. In both the pre-photographing mode and the main photographing mode, an object to be photographed is captured by the camera, the captured image is stored in the buffer, and the main operator evaluates the quality of the image by comparing the image stored in the buffer with the stored reference quality level preset according to the evaluation items from the iris recognition viewpoint. The pre-photographing mode is a preparatory mode before entering the main photographing mode, and the main photographing mode is a mode for finally acquiring an eye image. To switch from the pre-photographing mode to the main photographing mode, an image having quality higher than the preset reference quality level (middle level) stored in the memory has to be acquired for iris recognition. Below, each mode will be described.

The pre-photographing mode according to an exemplary embodiment of the present invention is as follows. A person to be photographed presses a button of the apparatus having the camera to directly inform that they are willing to be photographed so that the camera can enter the pre-photographing mode, or a sensor of a camera automatically senses entrance of an object to be photographed to thereby switch from the sleep mode to the pre-photographing mode.

In the pre-photographing mode, an image is stored and its quality is evaluated as follows. From the moment when the camera enters the pre-photographing mode, the camera continuous to capture an image and store the captured image in the buffer. With regard to each image stored in the buffer, the main operator of the camera evaluates the image quality in terms of suitability for iris recognition. The images captured in the pre-photographing mode are used not for an image candidate for the iris recognition but for determining whether to enter the main photographing mode. Thus, the image stored in the buffer may be set to be deleted from the buffer after a predetermined time or after a predetermined number of photographing times if its quality is completely evaluated by the main operator.

In the pre-photographing mode, location adjustment of a person to be photographed is as follows. In order to switch from the pre-photographing mode to the main photographing mode, a person to be photographed has to move at proper speed and be within a proper location range so that a good photographing condition is satisfied. The proper moving speed and proper location range of the person to be photographed, which satisfy the above good photographing condition, are determined by the specification of the lens, camera and main operator, as described above. In particular, the proper moving speed is determined on the basis of the speed with which the camera captures and stores an image, speed with which the main operator processes the image, etc. The proper location range is determined by the depth of field, viewing angle, etc. of the lens. Until the pre-photographing mode is switched to the main photographing mode, the person to be photographed (a) moves forward, backward, leftward and rightward through trial and error without any information about his/her proper moving speed and location range for the proper photographing condition, (b) moves based on the information about the proper photographing condition, and (c) moves based on continuous help of the photographing guide. Method (a) takes a long time to enter the main photographing mode and results in inconvenience of a person to be photographed, so that methods (b) and (c) can be used for switching from the pre-photographing mode to the main photographing mode. In the case of the method (b), the passive photographing guide is mostly used and configured to inform a person to be photographed of the good photographing condition once or continuously during the pre-photographing mode. In the case of the method (c), the current moving speed and location of a person to be photographed are grasped on the basis of the analysis of the image captured during the pre-photographing mode, and thus information about the moving speed and location or information about a direction and speed where the person to be photographed must move is relayed to the person to be photographed. Regarding all three methods (a), (b) and (c), if a mirror and/or an LCD or similar display is additionally provided in the photographing guide so that a person to be photographed can look at themselves, they can adjust their own motion through the display means, thereby more quickly and easily obtaining a high quality image.

Next, a process of finishing the pre-photographing mode and switching from the pre-photographing mode into the main photographing mode will be described. The pre-photographing mode is switched to the main photographing mode when the quality of the images captured and stored in the buffer under the pre-photographing mode is equal to or higher than the middle quality level from the iris recognition viewpoint. The middle quality level of the images from the iris recognition viewpoint is determined by the main operator through comparison with the preset reference quality level stored in the memory. At this time, the camera makes the photographing guide generate a signal for informing a person to be photographed that the main photographing mode begins and starts photographing in earnest. Such a signal serves to inform that the location relation between the camera and the person to be photographed at this moment is good enough to start photographing in earnest.

The kind of signal generated by the photographing guide is dependent on the kind of unit that achieves the photographing guide. If the signal transmitter of the photographing guide is achieved by a beeper that generates a beep, a beep is shortly generated once to thereby inform that the main photographing mode begins. Alternatively, if the signal transmitter of the photographing guide is achieved by an LED indicator, the indicator flickers several times to thereby inform that the main photographing mode begins.

Next, the main photographing mode will be described. Since the switching to the main photographing mode occurs when the location of a person to be photographed is good enough to start photographing in earnest, it is configured from the beginning of the main photographing mode that they move forward and backward slowly to make the camera take a plurality of eye images or the camera lens automatically moves forward and backward and takes a plurality of eye images while the person to be photographed stays still. The former is suitable when the camera is fixed, and the latter is adapted when the camera is mounted with an actuator to move the lens forward and backward. With these methods, all or some of the images captured in the main photographing mode are stored in the buffer, and the respective stored images are used as a candidate for selecting a final image. The main photographing mode is finished as follows. The main photographing mode is finished when a predetermined number of images must be acquired. There may be many conditions for finishing the main photographing mode, but three finishing conditions are provided in this exemplary embodiment. A first condition is related to time intervals for the main photographing mode. The time intervals are manually preset or automatically adjusted on the basis of determination of the main operator in accordance with photographing environments. For example, if the time interval is 5 seconds, the main photographing mode is finished 5 seconds after the beginning of the main photographing mode. A second condition is related to the number of images captured in the main photographing mode. The number of images may be manually preset or automatically adjusted on the basis of determination of the main operator in accordance with photographing environments. For example, if the number of images is 100, the main photographing mode is finished when 100 images have been captured from the beginning of the main photographing mode. A third condition is related to the number of images satisfying a specific quality condition among the images captured in the main photographing mode.

To inform a person to be photographed that the main photographing mode is finished, the photographing guide operates to transmit a signal to the person to be photographed. As in the case where the pre-photographing mode is switched to the main photographing mode, this signal is achieved by one or a combination of two or more among sound, voice, vibration and LED flickering.

Next, a process of forming a candidate group and selecting a final image will be described. With regard to the images stored in the buffer in the main photographing mode, the candidate group for selecting a final image is set under a preset candidate selection condition. As a method for setting the candidate group, one of the following is used.

> (a) A method of selecting all the images stored in the buffer
> (b) A method of selecting an image satisfying specific quality or more among the images stored in the buffer

A single or plurality of images is selected as a final image from the candidate group set as above with respect to the image quality from the iris recognition viewpoint. In the case of using the method (b), the candidate group may be null. In this case, it is determined again whether the quality of stored image is higher than the middle quality level, and it returns to the pre-photographing mode or the main photographing mode begins again.

Below, the quality evaluation and quality level of the image will be described in detail from the iris recognition viewpoint. The quality evaluation method is roughly classified into full reference methods and no-reference methods. In the case of the full reference methods, a reference image regarded as having perfect quality is set and compared with a test image when the quality of the test image is evaluated, so that the quality evaluation can be achieved. On the other hand, in the case of no-reference methods, the image quality is evaluated without the reference image. Since there no difference in the spirit of the present invention regardless of which of the above methods is used for evaluating the eye image quality, only the no-reference methods for evaluating the eye image quality will be described in this exemplary embodiment.

From the viewpoint of iris recognition, the quality of the eye image may be classified into three types, (A) quality relating to whether an eye image is valid, (B) quality globally applied to a general image, and (C) quality specially applied to an eye image. The reason why the first kind of quality is evaluated is because a captured image must basically include an image of a real human eye. As relevant evaluation items, there are (A1) the degree of eye capture, (A2) an actual eye, etc. The reason why the second kind of quality is evaluated is because an image must be sharp so as to obtain more information from a photographed iris when the captured image is determined as the eye image. As relevant evaluation items, there are (B1) resolution, (B2) contrast ratio, (B3) noise level, etc. The reason why the second kind of quality is evaluated is because an iris region must be exactly shown even though the human's real eye is clearly photographed. As relevant evaluation items, there are (C1) angle of the face when a person to be photographed stares at a lens, (C2) location of the pupil in the eye, (C3) the degree of exposure of the iris due to reflected light, an eyelid, etc., (C4) resolution in the vicinity of an iris contour or within the iris, (C5) contrast ratio in the vicinity of an iris contour or within the iris, (C6) noise level in the vicinity of an iris contour or within the iris, etc. Besides, there may be various evaluation items, and the foregoing evaluation items are purely exemplary.

Regarding the respective items, the evaluation result may be quantified and the quality level is provided to the eye image on the basis of the evaluation results. When the level of the eye image is divided into four levels, i.e. poor, fair, good and the highest, the 'poor' level is the lowest level and satisfies the minimum reference for obtaining a valid eye image; the 'fair' level is a level sufficient to be used for iris recognition; the 'good' level is a level sufficiently good to be used for iris recognition; and the last 'highest' level is the best eye image level possible. The reference for dividing the quality level may be varied depending on photographing environments since it is dependent on the optical performance of the given camera lens, the image processing performance of the camera, surrounding light, etc. To make the classification of the level possible, a general quality level may be given as a numerical value to every captured image. The following is an example of the general quality level (=T), which is shown using the above eleven items.

If the degree of eye capture is numerically expressed by A1 and its weight is w1; the actual eye is numerically expressed by A2 and its weight is w2; the resolution of an image is numerically expressed by B1 and its weight is w3; the contrast ratio is numerically expressed by B2 and its weight is w4; the noise level is numerically expressed by B3 and its weight is w5; the angle of the face when a person to be photographed stares at a lens is numerically expressed by C1 and its weight is w6; the location of the pupil in the eye is numerically expressed by C2 and its weight is w7; the degree of exposure of the iris in the eye due to reflected light; an eyelid; etc., is numerically expressed by C3 and its weight is w8; the resolution in the vicinity of an iris contour or within the iris is numerically expressed by C4 and its weight is w9; the contrast ratio in the vicinity of an iris contour or within the iris is numerically expressed by C5 and its weight is w10; and the noise level in the vicinity of an iris contour or within the iris is numerically expressed by C6 and its weight is w11, a general quality level T of the image is the sum of a value obtained by multiplying w1 by A1; a value obtained by multiplying w2 by A2; a value obtained by multiplying w3 by B1; a value obtained by multiplying w4 by B2; a value obtained by multiplying w5 by B3; a value obtained by multiplying w6 by C1; a value obtained by multiplying w7 by C2; a value obtained by multiplying w8 by C3; a value obtained by multiplying w9 by C4; a value obtained by multiplying w10 by C5; and a value obtained by multiplying w11 by C6. This is the following expression (1).

$$T = w1*A1 + w2*A2 + w3*B1 + w4*B2 + w5*B3 + w6*C1 + w7*C2 + w8*C3 +$$
$$w9*C4 + w10*C5 + w11*C6 \dots\dots\dots\dots\dots (1)$$

That is, the general quality level is obtained by multiplying an evaluation value of each quality item by a weight value instead of a negative value and then summing the results. If it is determined that the captured image is not an eye image, it is good to make the general quality level zero. Therefore, if the captured image does not satisfy the condition for a valid eye image, all the above weights w1, w2, ..., w11 are set to zero (that is, a conditional weight). To compare the image qualities with each other, the general quality level T is standardized to be within a section [0, 1]. In short, an evaluation value of each item ranges must be within the section [0, 1] and the sum of weights w1 + w2 + ... + w11 must equal 1. In the case that the quality level is classified on the basis of the general quality level T, if T = 0, it does no pertain to any level since it is not an eye image. If T is greater than 0, it is higher than the 'poor' level. In the case that L1, L2 and L3 satisfying O<L1<L2<L3<1 are found in through experimentation, if T is less than L1, it is determined as the 'poor' level. If T is between L1 and L2, it is determined as the 'fair' level. If T is between L2 and L3, it is determined as the 'good' level. If T is greater than L3, it is determined as the 'best' level. The foregoing switching from the pre-photographing mode to the main photographing mode is performed when the general quality level T is greater than L1. Such a reference quality level can be also determined by taking the performance of the camera, the processing speed of the operator, etc. into account. The respective weights can be determined in consideration of an effect on iris recognition. In brief, this can be tabulated as follows (se e table 1). Table 1 shows the evaluation items and the conditions for entering the main photographing mode for acquiring the general quality level.

The above general quality level T for the image may be obtained on the basis of a value evaluated by selecting one or more than two among the quality evaluation items of table 1 and numerically expressing the selected evaluation item(s), as shown in Expression 1.

**Table 1**

| Quality evaluation items | Condition for valid eye image | Condition for entering main photographing mode |
|---|---|---|
| (A1) the degree of eye capture | Capture by 50% or more | Capture by 80% or more |
| (A2) actual eye | Real eye | Real eye |
| (B1) resolution | Fair | Good |
| (B2) contrast ratio | Fair | Good |
| (B3) noise level | Fair | Poor |

(continued)

| Quality evaluation items | Condition for valid eye image | Condition for entering main photographing mode |
| --- | --- | --- |
| (C1) angle of the face when a person to be photographed stares at a lens | Within 30 degrees from a forward direction | Within 15 degrees from a forward direction |
| (C2) location of the pupil in the eye | No matter where located | the pupil center located in the vicinity of the center of the eye |
| (C3) the degree of exposure of the iris | Needed by 50% | Pupil in the center |
| (C4) resolution in the vicinity of an iris contour or within the iris | Fair | Good |
| (C5) contrast ratio in the vicinity of an iris contour or within the iris | Fair | Good |
| (C6) noise level in the vicinity of an iris contour or within the iris | Fair | Poor |

[Industrial Applicability]

The present invention can provide an apparatus and method for acquiring high quality eye images for iris recognition, which includes: dividing a camera mode for high quality eye image acquisition into a pre-photographing mode and a main photographing mode, and acquiring one or more eye images through a camera in the pre-photographing mode; evaluating image quality based on one or more eye images acquired by the camera, comparing the evaluated quality level with a preset reference quality level stored in a memory, and switching from the pre-photographing mode to the main photographing mode if the reference quality level is satisfied; capturing a plurality of eye images in the main photographing mode, and setting an eye image candidate group; and selecting a final image from the candidate group if the candidate group is set.

**Claims**

1. A method for acquiring high quality eye images with a camera, a lens, a main operator, a buffer and photographing guide, comprising:

   dividing a camera mode for eye image acquisition into a pre-photographing mode and a main photographing mode, acquiring one or more eye images through the camera in the pre-photographing mode, and storing the eye image in the buffer;
   setting and storing a reference for finishing the main photographing mode;
   evaluating eye image quality based on one or more eye images acquired by the camera in the pre-photographing mode and stored in the buffer, comparing the evaluated eye image quality with a preset reference quality condition stored in a memory, and switching from the pre-photographing mode to the main photographing mode if the reference quality condition is satisfied;
   capturing a plurality of eye images through the camera in the main photographing mode, and storing the plurality of eye images in the buffer;
   finishing the main photographing mode on the basis of the reference for finishing the main photographing mode; and
   selecting a final eye image from the stored images in the main photographing mode.

2. The method according to claim 1, wherein the selecting the final eye image from the images stored in the buffer in the main photographing mode comprises setting an eye image candidate group satisfying the stored preset reference quality condition among the stored images, selecting a final eye image from the eye image candidate group, and returning to the main photographing mode or the pre-photographing mode if no eye image candidate group is set.

3. The method according to claim 1, wherein the reference set for finishing the main photographing mode comprises time intervals for the main photographing mode, the number of images to be captured during the main photographing mode, or the number of images satisfying a previously set and stored reference quality condition.

4. The method according to claim 1, wherein the quality to be evaluated for determining the image quality level comprises quality relating to whether an eye image is valid, quality globally applied to a general image, and quality specially applied to an eye image.

5. The method according to claim 4, wherein the quality relating to whether an eye image is valid comprises a degree of eye capture and/or actual eye; the quality globally applied to a general image comprises at least one selected from a resolution, a contrast ratio, and a noise level; and the quality specially applied to an eye image comprises at least one selected from an angle of the face when an object to be photographed stares at a lens, a location of the pupil in the eye, a degree of exposure of the iris in the eye, a resolution in the vicinity of an iris contour or within the iris, a contrast ratio in the vicinity of an iris contour or within the iris, and a noise level in the vicinity of an iris contour or within the iris.

6. The method according to any one of claims 1 to 5, wherein the capturing a plurality of eye images through the camera in the main photographing mode and storing the plurality of eye images in the buffer comprises issuing an instruction from the photographing guide for motion of an object to be photographed when entering the main photographing mode, or capturing a plurality of images by moving the lens of the camera forward and backward while the object to be photographed remains still.

7. The method according to claim 6, wherein the determining the quality level of the eye images for entering the main photographing mode comprises obtaining a general quality level reflecting respective quality evaluation items as a numerical value and comparing the numeral value with the previously set and stored reference quality condition.

8. The method according to claim 7, wherein the general quality level is obtained by numerically expressing the respective quality evaluation items, and if the degree of eye capture is numerically expressed by A1 and a weight thereof is w1; the actual eye is numerically expressed by A2 and a weight thereof is w2; the resolution of the image is numerically expressed by B1 and a weight thereof is w3; the contrast ratio is numerically expressed by And a weight thereon is w4; noise level, is numerically expressed by B3 and a weight thereof is w5; the angle of the face when an object to be photographed stares at the lens is numerically expressed by C1 and a weight thereof is w6; the location of the pupil in the eye is numerically expressed by C2 and a weight thereof is w7; the degree of exposure of the iris in the eye due to reflected light; an eyelid; etc., is numerically expressed by C3 and a weight thereof is w8; the resolution in the vicinity of an iris contour or within the iris is numerically expressed by C4 and a weight thereof is w9; the contrast ratio in the vicinity of an iris contour or within the iris is numerically expressed by C5 and a weight thereof is w10; and the noise level in the vicinity of an iris contour or within the iris is numerically expressed by C6 and a weight thereof is w1 1, the general quality level is evaluated by the sum of a value obtained by multiplying w1 by A1; a value obtained by multiplying w2 by A2; a value obtained by multiplying w3 by B1; a value obtained by multiplying w4 by B2; a value obtained by multiplying w5 by B3; a value obtained by multiplying w6 by C1; a value obtained by multiplying w7 by C2; a value obtained by multiplying w8 by C3; a value obtained by multiplying w9 by C4; a value obtained by multiplying w10 by C5; and a value obtained by multiplying w11 by C6, or the general quality level is evaluated by selecting one or more than two among the quality evaluation items and summing the same.

$$\{T = w1*A1 + w2*A2 + w3*B1 + w4*B2 + w5*B3 + w6*C1 + w7*C2 + w8*C3 + w9*C4 + w10*C5 + w11*C6\}$$

9. An apparatus for acquiring high quality eye images with a camera, a lens, a main operator, a buffer a photographing guide, comprising:

a unit for dividing a camera mode for eye image acquisition into a pre-photographing and a main photographing mode, acquiring one or more eye images through the camera in the pre-photographing mode, and storing the eye image in the buffer;
a unit for setting and storing a reference for finishing the main photographing mode;
a unit for evaluating eye image quality based on one or more eye images acquired by the camera in the pre-photographing mode and stored in the buffer, comparing the evaluated eye image quality with a preset reference quality condition stored in a memory, and switching from the pre-photographing mode to the main photographing mode if the reference quality condition is satisfied;

a unit for capturing a plurality of eye images through the camera in the main photographing mode, and storing the plurality of eye images in the buffer;

a unit for finishing the main photographing mode on the basis of the reference for finishing the main photographing mode; and

a unit for selecting a final eye image from the images stored in the main photographing mode.

10. The apparatus according to claim 9, wherein the unit for selecting the final eye image from the images stored in the buffer in the main photographing mode comprises a unit for setting an eye image candidate group satisfying the stored preset reference quality condition among the stored images, selecting a final eye image from the eye image candidate group, and returning to the main photographing mode or the pre-photographing mode if no eye image candidate group is set.

11. The apparatus according to claim 9, wherein the reference set for finishing the main photographing mode comprises time intervals for the main photographing mode, the number of images to be captured during the main photographing mode, or the number of images satisfying a previously set and stored reference quality condition.

12. The apparatus according to claim 9, wherein the quality to be evaluated for determining the quality level comprises quality relating to whether an eye image is valid, quality globally applied to a general image, and quality specially applied to an eye image.

13. The apparatus according to claim 12, wherein the quality relating to whether an eye image is valid comprises a degree of eye capture and/or actual eye; the quality globally applied to a general image comprises at least one selected from a resolution, a contrast ratio, and a noise level; and the quality specially applied to an eye image comprises at least one selected from an angle of the face when an object to be photographed stares at a lens, a location of the pupil in the eye, a degree of exposure of the iris, resolution in the vicinity of an iris contour or within the iris, a contrast ratio in the vicinity of an iris contour or within the iris, and a noise level in the vicinity of an iris contour or within the iris.

14. The apparatus according to claim 13, wherein the general quality level is obtained by numerically expressing the respective quality evaluation items, and if the degree of eye capture is numerically expressed by A1 and a weight thereof is w1; the actual eye is numerically expressed by A2 and a weight thereof is w2; the resolution of the image is numerically expressed by B1 and a weight thereof is w3; the contrast ratio is numerically expressed by B2 and a weight thereof is w4; noise level is numerically expressed by B3 and a weight thereof is w5; the angle of the face when an object to be photographed stares at the lens is numerically expressed by C and a weight thereof is w6; the location of the pupil in the eye is numerically expressed by C2 and a weight thereof is w7; the degree of exposure of the iris in the eye due to reflected light; an eyelid; etc. is numerically expressed by C3 and a weight thereof is w8; the resolution in the vicinity of an iris contour or within the iris is numerically expressed by C4 and a weight thereof is w9; the contrast ratio in the vicinity of an iris contour or within the iris is numerically expressed by C5 and a weight thereof is w10; and the noise level in the vicinity of an iris contour or within the iris is numerically expressed by C6 and a weight thereof is w11, the general quality level is evaluated by the sum of a value obtained by multiplying w1 by A1; a value obtained by multiplying w2 by A2; a value obtained by multiplying w3 by B1; a value obtained by multiplying w4 by B2; a value obtained by multiplying w5 by B3; a value obtained by multiplying w6 by C1; a value obtained by multiplying w7 by C2; a value obtained by multiplying w8 by C3; a value obtained by multiplying w9 by C4; a value obtained by multiplying w10 C5; and a value obtained by multiplying w11 by C6, or the general quality level is evaluated by selecting one or more than two among the quality evaluation items and summing the same.

$$\{T = w1*A1 + w2*A2 + w3*B1 + w4*B2 + w5*B3 + w6*C1 + w7*C2 + w8*C3 + w9*C4 + w10*C5 + w11*C6\}$$

15. The apparatus according to any one of claims 9 to 14, wherein the photographing guide comprises a signal transmitter for transmitting a mode switching signal to an object to be photographed, or transmitting a signal for motion instruction for photographing.

16. The apparatus according to claim 15, wherein the signal transmitter is configured to select and generate at least one selected from an auditory signal, a visual signal, and vibration.

**17.** The apparatus according to claim 16, further comprising: a mirror and/or a liquid crystal display (LCD) allowing the object to be photographed to view own image when captured by the camera so that the object to be photographed can quickly move to a location where a satisfactory eye image can be acquired.

**18.** The apparatus according to claim 15, wherein the plurality of eye images is captured by moving the lens of the camera forward and backward while the object to be photographed stays still, when entering the main photographing mode.

FIG 1

FIG. 2

FIG. 3

FIG. 4

FIG. 5

FIG. 6

In focus

FIG. 7

FIG. 8

FIG. 9

FIG.10